# EUROPEAN PATENT APPLICATION

(11) **EP 4 060 391 A1**
(43) Date of publication of application: **21.09.2022**
(21) Application number: 21305343.2
(22) Date of filing: 19.03.2021
(51) Int. Cl.: G02B 6/44

(54) **OPTICAL REPAIR JOINT FOR THREE PHASE CABLE**

(71) Applicant: Nexans, 92400 Courbevoie (FR)
(72) Inventor: SKAUG, Atle, Oslo 0584 (NO); SANGAR, Robin Kumar, 1445 Drobak (NO); ROD, Alf Erik, 1788 Halden (NO)
(74) Representative: Ipsilon

(57) **Abstract**

There is provided a cable joint (20) for jointing two cable ends of an optical fiber cable (25) of an optical fiber composite electric power cable that comprises at least one electric power cable (12, 13, 14) and an optical fiber cable (25). The cable joint (20) comprises two fiber optic joint closures (27, 28) arranged at each of the two cable ends of the optical fiber cable (25), and an optical fiber element (15) arranged between the two fiber optic joint closures. The fiber optic joint closures (27, 28) and the optical fiber element (15) are adapted to be arranged within the optical fiber composite electric power cable (10), and the length of the optical fiber element is adapted to match the distance between the two fiber optic joint closures.

## Description

The invention regards a repair joint comprising two fiber optic joint closures/boxes and an exact length of optical fiber between the two joint closures.

An optical fiber composite electric power cable is a cable wherein an optical fiber is included in an electric power cable. Such composite electrical/optical cables may have three or more insulated power conductors and one or more fiber optic cables and other longitudinal elements arranged within a common armouring. If one of the elements in a bundle is damaged, it may be necessary to cut the bundle and make a controlled joint of all elements, in order to obtain equal tension in all elements and the protecting armour. If the optical part of a composite cable is damaged, a repair will most probably also require jointing of the power part of the cable.

Such optical fiber composite electric power cable may for example be used in offshore applications. Most subsea power cables installed offshore have a fiber optic element containing 6-48 optical fibers for signal transmission, but there may be from 1 to 96 fibers. Another example is in installation environments that require monitoring of the operation of electricity, wherein the optical fibers may be used for detecting temperature distribution of the power cable.

Two cable ends often need to be connected to each other, for example when installing the cables in the application at hand, or in a jointing process if the cable is broken and require repair. When jointing the optical fiber cable of the optical fiber composite electric power cable, it is realized that a certain extra length has to be added in order to accomplish the jointing of the cable ends.

Such joining/splicing of a fiber element thus leads to an element that is longer than the cable it came from, because you need to pull the damaged element off the cable and splice in a replacement length. This is called overlength and the overlength is then wound onto the cable again and needs to be protected from mechanical damage. The cable winding and protection results in a significant diameter increase of the cross section of the cable.

Prior art solutions comprise unwinding the phases in the cable by pulling the cable back through the lay-up and perform an in-line joint on the optical fiber element. If this is impossible, the entire cable may need to be cut and a factory joint including power phases performed. This is a very costly and time consuming process.

WO2010124733 describes repair box is shaped to fit between the power cables and extra cable is stored within the repair box.

EP0646817 describes use of a jointing cabinet which is arranged in top of the cable. As the cabinet is arranged onto the cable, the stiffness and diameter of the jointing area increases significantly.

An object of the invention is to provide a cable repair joint for jointing two cable ends which minimizes increase in diameter and stiffness of the cable at the repair joint location.

The object of the invention is achieved by means of the features of the patent claims.

In one embodiment, a cable joint for jointing two cable ends of an optical fiber cable of an optical fiber composite electric power cable comprises at least one electric power cable and an optical fiber cable. The cable joint comprises two fiber optic joint closures arranged at each of the two cable ends of the optical fiber cable, and an optical fiber element arranged between the two fiber optic joint closures. The fiber optic joint closures and the optical fiber element is adapted to be arranged within the optical fiber composite electric power cable. The length of the optical fiber element is adapted to match the distance between the two fiber optic joint closures when the fiber optic joint closures are arranged in the optical fiber composite electric power cable.

The optical fiber composite electric power cable comprises in one embodiment at least two electric power cables and the fiber optic joint closures is adapted to be arranged within a space formed between the at least two electric power cables. The fiber optic joint may be shaped and have a size that is complementary to the space formed between the at least two electric power cables. When the fiber optic joint closures are arranged within the optical fiber composite electric power cable, the outer dimensions of the power cable are not distorted, but remain the same as for the rest of the cable.

The fiber optic joint closures comprise in one embodiment connectors arranged at opposing ends thereof. The connectors are adapted to receive at one end one of the two cable ends of the fiber optical cable and at the other end an end of the length of optical fiber cable.

The fiber optic joint closures may further comprise a cavity for accommodating spliced optical fiber received through the two connectors.

The invention will now be described in more detail by means of example and by reference to the accompanying figures.
Figure 1 illustrates an optical fiber composite electric power cable
Figure 2 illustrates an optical fiber cable joint
Figure 3 illustrates a cross section of an electric power cable
Figure 4 illustrates a fiber optic joint closure
Figure 5 shows a detail of a fiber optic joint closure.

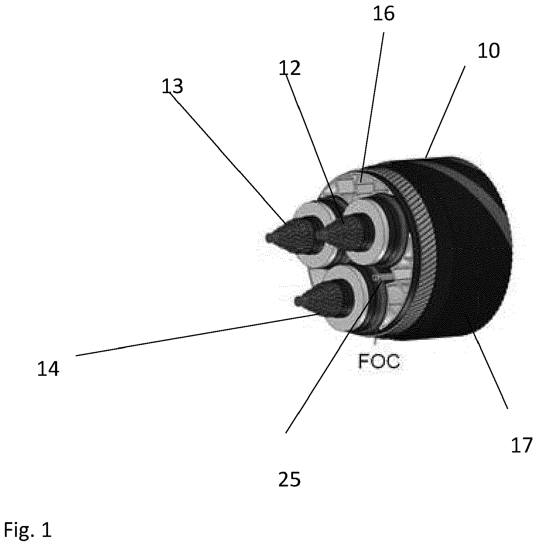

Figure 1 illustrates an example of an optical fiber composite electric power cable 10 comprising three electric power cables 12, 13, 14 and an optical fiber cable 25. The electric power cables are also called power phases. The electric power cables are in this example not made up of multiple strands as a stranded copper conductor, but can be any kind of suitable conductor. The cable is surrounded by a protective sheath 17. Further, a filler material 16 fills preferably up all of the vacant space between the electric power cables and optical fiber cable to avoid damage to the other elements of the cable.

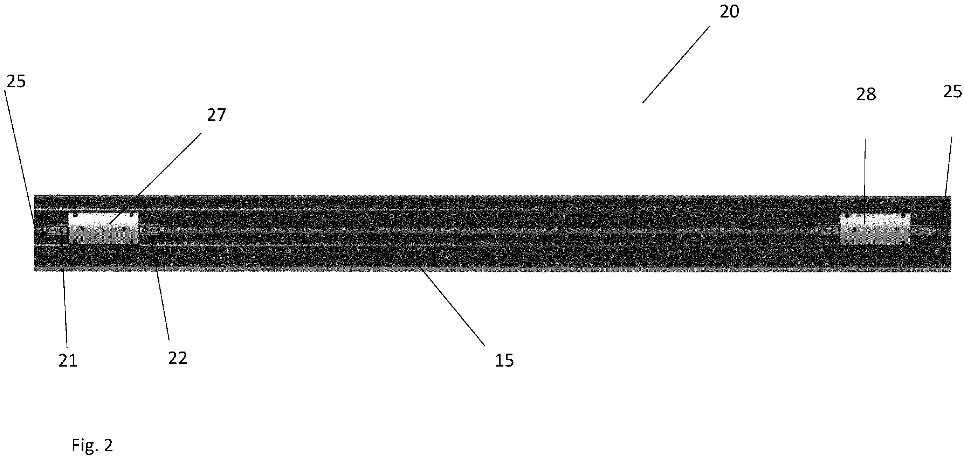

Figure 2 illustrate a cable joint 20 for jointing two cable ends of an optical fiber cable 25 of an optical fiber composite electric power cable, for example a cable as illustrated in figure 1 or other type of cable comprising both electric power cable and optical cable. The cable joint 20 comprises two fiber optic joint closures 27, 28 arranged at each of the two cable ends of said optical fiber cable 25, and an optical fiber element 15 is arranged between the two fiber optic joint closures. The fiber optic joint closures 27, 28 comprise connectors 21, 22 for guiding one end of the optical fiber cable 25 and one end of the optical fiber element 15 into the fiber optic joint closures and fixing the cables relative to the fiber optic joint closures.

When there is a need to repair a damaged stranded or other optical fiber element in a three-phase cable, the two fiber optic joint closures are used in series. Any damaged section of optical fiber cable is cut away if necessary, and one fiber optic joint closure 27 is arranged at one end of the fiber cable 25 (at the left side in the figure), and the other fiber optic joint closure 28 is arranged at the other end of the fiber cable 25 (at the right side in the figure). The distance between the two fiber optic joint closures is measured or calculated and a length of optical fiber element 15 is then provided that match the distance between the two fiber optic joint closures.

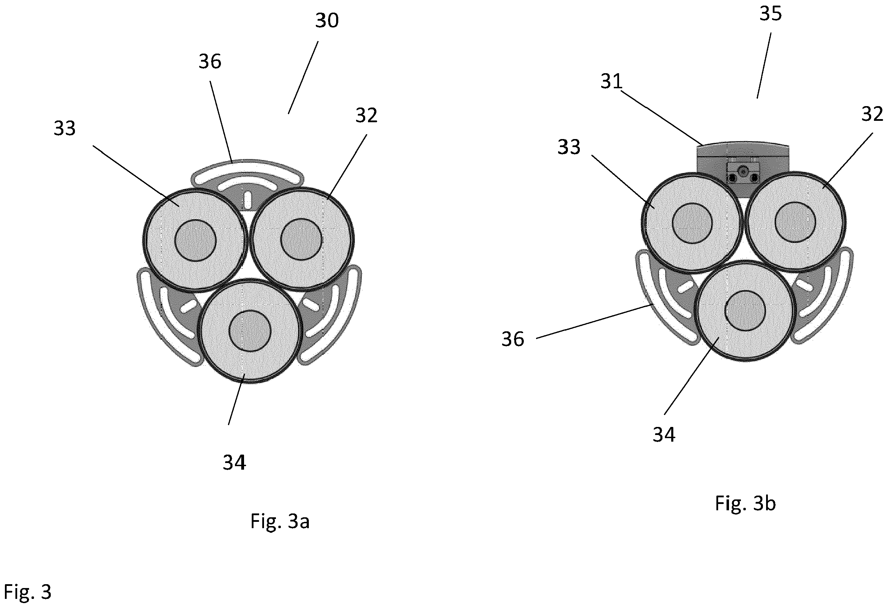

The fiber optic joint closures are adapted to be placed in the spaces between power phases, where fillers are normally placed to achieve a round cross section. This placement is illustrated in figure 3. Figure 3a shows an electric power cable 30 without a cable joint and figure 3b shows the electric power cable after repair/cable joining, with a cable joint arranged between the two of the phases 32, 33.

The optical fiber composite electric power cable 30 comprises three electric power cables 32, 33, 34, and filler material 36. When using the joint, the two fiber optic joint closures 31 are arranged in the space formed between two of the electric power cables 32, 33, replacing the filler material in that space. The space is formed between the electric power cables 32, 33 and a protective or other sheath arranged at the outside of the optical fiber composite electric power cable 30, 35, so that the fiber optic joint closures and the optical fiber element is arranged within the space and thus within the optical fiber composite electric power cable. The two fiber optic joint closures are arranged in series along the length of the optical fiber composite electric power cable with the optical fiber element between them.

The fiber optic joint closures may be shaped complementary to the space formed between the at two electric power cables to match the shape and size of the space formed between the electric power cables 32, 33 so that the resulting cable cross section appears unchanged from the outside. Between the closures in the length direction within the cable, the optical fiber element of exactly the needed length is arranged. The optical fiber element may have a length of additional exposed optical fiber on each end that is inserted into each of the optic joint closures. This overlength of exposed fiber can be pulled away from the closure and spliced to fiber from the original cable, and the overlength of fiber can thereafter be placed back into each joint closure. As the only overlength of fiber is the exposed fiber needed for splicing, the fiber optic joint closures may be sufficiently small to not distort and/or increase the diameter of the optical fiber composite electric power cable.

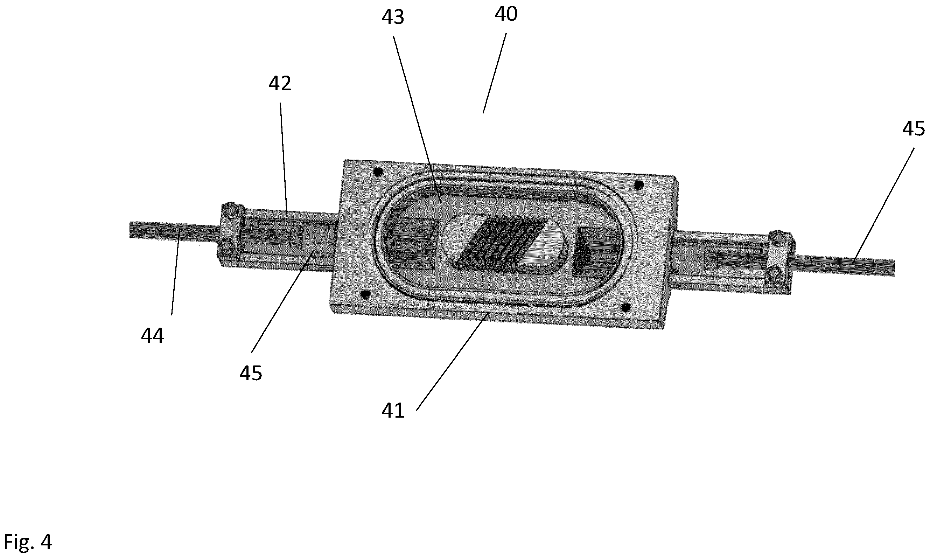

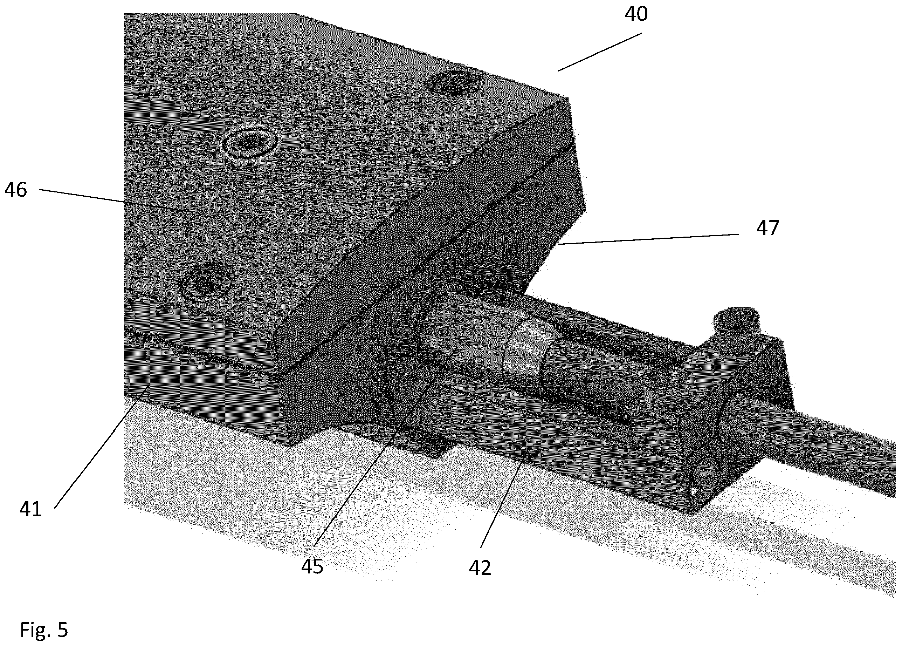

Figure 4 and 5 illustrates an example of a fiber optic joint closure 40 for use in the cable joint. The fiber optic joint closure may for example be one of the fiber optic joint closures 27, 28 in figure 2.

Figure 4 shows a top view of a fiber optic joint closure 40 without a lid. The fiber optic joint closure 40 comprises a housing 41 having two openings and two connectors 42 arranged at opposing ends of the housing. The connectors are arranged by the openings for guiding one end of the optical fiber cable 44 and one end of the optical fiber element 46 into the housing and fixing the cables relative to the fiber optic joint closure. There is also provided an adapter 45 for fixing the optical fiber cable and the optical fiber element in the openings of the fiber optic joint closure.

Inside the housing 41 there is a cavity 43 which can accommodate the spliced optical fibers and any overlength of optical fiber from the splicing.

The splicing of the optical fibers of the optical fiber cable 44 and the optical fiber element is usually performed outside the fiber optic joint closure, and the spliced fibers are arranged in the cavity of the housing where there also is room for any overlength of optical fiber.

Figure 5 shows the fiber optic joint closure 40 with a lid 46 arranged to close the cavity and seal the fiber optic joint closure. The shape of the lid is in this embodiment rounded and the lower part 47 of the housing is shaped complementary to the shape of the power cables. This enables the fiber optic joint closure 40 to fit inside the power cable as described above.

## Claims

1. A cable joint (20) for jointing two cable ends of an optical fiber cable (25) of an optical fiber composite electric power cable (10) comprising at least one electric power cable (12, 13, 14) and an optical fiber cable (25), the cable joint (20) comprising two fiber optic joint closures (27, 28) arranged at each of the two cable ends of the optical fiber cable (25), and an optical fiber element (15) arranged between the two fiber optic joint closures, where the fiber optic joint closures and the optical fiber element are adapted to be arranged within the optical fiber composite electric power cable (10), and where the length of the optical fiber element is adapted to match the distance between the two fiber optic joint closures.

2. The cable joint (20) according to claim 1, wherein the optical fiber composite electric power cable (10) comprises at least two electric power cables (12, 13, 14) and wherein the fiber optic joint closures (27, 28) is arranged within a space formed between the at least two electric power cables (12, 13, 14).

3. The cable joint (20) according to claim 2, wherein the fiber optic joint closures (27, 28) are shaped complementary to the space formed between the at least two electric power cables (12, 13, 14).

4. The cable joint (20) according to any of claims 2 or 3, wherein the fiber optic joint closures (27, 28) have a size that match the size of the space formed between the electric power cables (32, 33).

5. The cable joint (20) according to any of claims 1 - 4, wherein the fiber optic joint closures (27, 28) are arranged within the optical fiber composite electric power cable (10) so as to maintain outer dimensions of the optical fiber composite electric power cable (10).

6. The cable joint (20) according to any of the preceding claims, wherein the fiber optic joint closures (27, 28) comprise connectors (21, 22) arranged at opposing ends thereof, being adapted to receive at one end one of the two cable ends of the fiber optical cable (25) and at the other end an end of the optical fiber element (15).

7. The cable joint (20) according to any of the preceding claims, wherein the fiber optic joint closures (27, 28) comprise a cavity for accommodating spliced optical fiber received through the two connectors.
